# EUROPÄISCHE PATENTSCHRIFT

(11) **EP 1 756 928 B1**
(45) Veröffentlichungstag und Bekanntmachung des Hinweises auf die Patenterteilung: **13.08.2008**
(21) Anmeldenummer: 05735554.7
(22) Anmeldetag: 03.05.2005
(51) Int. Cl.: H02K 1/27

(54) **SYNCHRONMOTOR**
SYNCHRONOUS MOTOR
MOTEUR SYNCHRONE

(30) Priorität: 02.06.2004 DE 102004027036
(43) Veröffentlichungstag der Anmeldung: 28.02.2007
(73) Patentinhaber: Etel S.A., 2112 Môtiers (CH)
(72) Erfinder: MOREL, Jean-Pierre, F-25300 Les Fourgs (FR)
(74) Vertreter: Pleyer, Hans Anno
(86) Internationale Anmeldenummer: PCT/EP2005/004767
(87) Internationale Veröffentlichungsnummer: WO 2005/119879

(56) Entgegenhaltungen:
- EP-A- 0 887 908
- DE-A1- 10 053 694
- US-A- 4 625 392
- US-A- 4 636 107
- US-A- 4 954 736
- US-A- 5 216 306
- US-A1- 2002 162 939
- US-A1- 2002 180 295
- PATENT ABSTRACTS OF JAPAN Bd. 008, Nr. 221 (E-271), 9. Oktober 1984 (1984-10-09) & JP 59 103553 A (MORIYAMA KOGYO KK), 15. Juni 1984 (1984-06-15)
- PATENT ABSTRACTS OF JAPAN Bd. 016, Nr. 300 (E-1227), 2. Juli 1992 (1992-07-02) & JP 04 079741 A (SEIKO EPSON CORP), 13. März 1992 (1992-03-13) in der Anmeldung erwähnt

## Beschreibung

Die Erfindung betrifft einen Synchronmotor gemäß dem Oberbegriff des Anspruches 1.

Synchronmotoren in Form von linearen oder rotativen Direktantrieben spielen in der Technik eine immer bedeutendere Rolle. Solche Direktantriebe benötigen keine mechanischen Übersetzungen, sie bewegen ihre Nutzlast vielmehr unmittelbar.

Ein Beispiel für einen solchen Direktantrieb ist in der EP 0 793 870 B1 beschrieben. Ein Stator trägt mit Spulen umwickelte Zähne, ein Rotor trägt regelmäßig angeordnete Permanentmagnete. Diese Magnete werden üblicherweise auf einem magnetischen Flussleiter aufgeklebt. Für bestimmte Anwendungen, wie zum Beispiel am Rundtisch einer Werkzeugmaschine, werden sehr hohe Drehzahlen von einem solchen Direktantrieb gefordert. Die Verklebung eines Magnets auf seinem Untergrund kann sich bei hohen Drehzahlen durch die Fliehkraft lösen. Die bei hohen Drehzahlen auftretende Verlustleistung erwärmt den Motor stark und trägt damit weiter dazu bei, dass für hohe Drehzahlen eine Verklebung der Magnete nicht mehr ausreichend ist.

Für die Erwärmung des Motors sind auch Wirbelströme verantwortlich. Die Spulen des Stators werden daher auf Blechpakete gewickelt, deren einzelnen Bleche gegeneinander isoliert sind. Auch der Flussleiter des Rotors wird gelegentlich als Blechpaket ausgebildet. Um Wirbelströme in den Magneten selbst zu unterbinden, wurden in der JP04079741A für Motoren bereits segmentierte Magnete vorgeschlagen, die aus mehreren, gegeneinander isolierten Schichten oder Segmenten zusammengesetzt sind. Diese Maßnahmen alleine führen aber bei hohen Drehzahlen noch nicht zu einer ausreichend stabilen Verbindung zwischen Magnet und Rotor.

Die Dokumente JP 59103553, US 2002/0162939, US 4636107 und US 4954736 zeigen jeweils einen Rotor, dessen Magnete am Rotor mit Klemmelementen befestigt sind. Im Falle der JP 59103553 weisen die Klemmelemente eine Nut auf und können aufgeweitet werden, um die Klemmwirkung zu verstärken.

Die US 4625392 zeigt einen Rotor, der Flussleitbleche mit Laschen aufweist, die gegen abgeschrägte Seiten von trapezähnlichen Magneten zu deren Befestigung umgebogen sind.

Es wurde auch bereits vorgeschlagen, die Magnete zusätzlich zur Verklebung zu klemmen. Die DE 100 53 694 A1 beschreibt einen solchen Synchronmotor. Mit Stirnseitig am Rotor angebrachten Klemmelementen, die zunächst radiale Klemmkrallen aufweisen, wird durch ein Verbiegen der Klemmkrallen in eine axiale Ausrichtung ein Festklemmen der Magnete am Rotor erreicht. Für diese Lösung sind allerdings zusätzliche Bauteile nötig, außerdem sind die Magnete nur an den Enden des Rotors geklemmt.

Aufgabe der Erfindung ist es daher, einen Synchronmotor anzugeben, dessen Magnete durch ein Verklemmen gut vor einem Ablösen vom Rotor geschützt sind, und der einfach herstellbar ist.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird ein Synchronmotor mit einem Rotor vorgeschlagen, auf dem Magnete durch Klemmelemente befestigt sind, wobei die Klemmelemente als Stege ausgebildet und zwischen den Magneten auf dem Rotor angeordnet sind. Da sich die Stege im Wesentlichen über die ganze axiale Länge des Rotors erstrecken, sind die Magnete gut am Rotor befestigt. Dies ist insbesondere dann von großer Bedeutung, wenn in axialer Richtung segmentierte Magnete zum Einsatz kommen, um Wirbelstromverluste und damit Wärmebildung in den Magneten selbst zu verringern.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: einen Synchronmotor,
- Figur 2: einen Teil eines Rotors ohne Magnete,
- Figur 3: einen Teil eines Rotors mit verklebten, noch nicht geklemmten Magneten, und
- Figur 4: einen Teil eines Rotors mit fertig montierten Magneten.

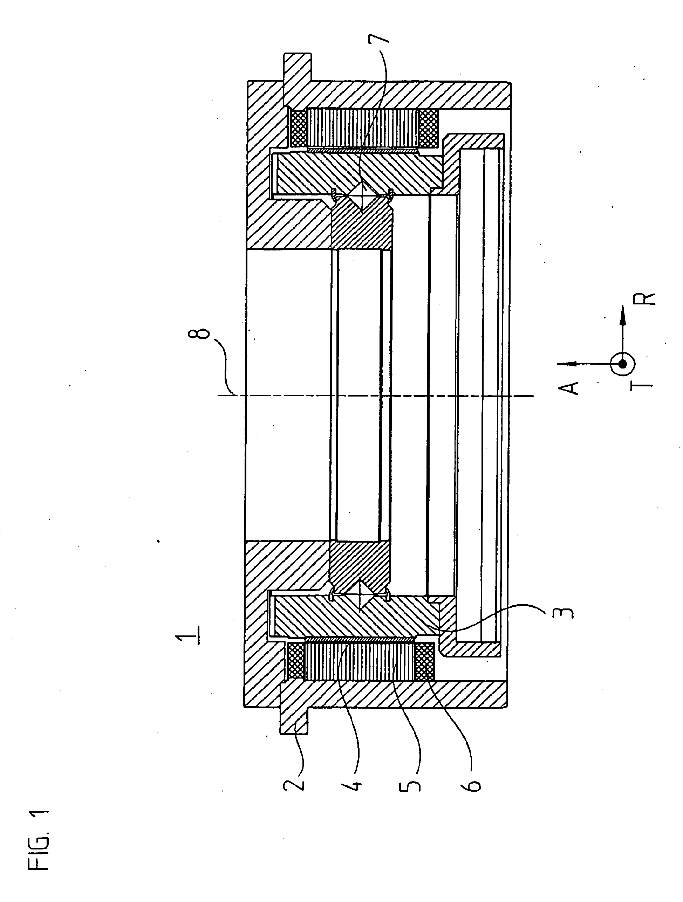

Figur 1 zeigt einen Schnitt durch einen rotatorischen Synchronmotor 1. Ein relativ zum Betrachter ortsfester Stator 2 und ein mit einem Lager 7 drehbar um eine Achse 8 gelagerter Rotor 3 bilden die wesentlichen Bestandteile dieses Motors 1. Durch die Geometrie des Motors 1 ist eine axiale Richtung A, eine radiale Richtung R und eine tangentiale Richtung T (letztere hier senkrecht zur Zeichenebene) vorgegeben.

Der Stator 2 umfasst einen Eisenkern 5 mit Zähnen und Lücken. In die Lücken des Eisenkerns 5 sind Spulen oder Wicklungen 6 eingelegt. Der Eisenkern 5 ist vorzugsweise als Blechpaket ausgebildet, dessen Bleche elektrisch gegeneinander isoliert sind, um Wirbelstromverluste zu verringen.

Der Rotor 3 umfasst Magnete 4, die den Wicklungen 6 gegenüberliegend angeordnet sind. Die Magnete 4 sind vorzugsweise Neodym-Eisen-Bor-Magnete, die in axialer Richtung A segmentiert sind, um Wirbelströme in den Magneten 4 zu unterbinden. Die einzelnen Teilmagnete, in axialer Richtung A typischerweise ca. 10 mm lang, sind dabei gegeneinander elektrisch isoliert.

Durch geeignete Bestromung der Wicklungen 6 lassen sich Magnetfelder erzeugen, die, gebündelt durch den Eisenkern 5, mit den Magnetfeldern der Magnete 4 so zusammenwirken, dass ein Drehmoment zwischen Stator 2 und Rotor 3 entsteht. Zur Bestromung der Wicklungen 6 sind zahlreiche Verfahren bekannt. Beispielsweise werden die Wicklungen 6 so zusammengeschaltet, dass drei verschiedene elektrische Phasen entstehen, die über pulsweitenmodulierte Ströme angesteuert werden.

Sind besonders hohe Drehzahlen des Rotors 3 erforderlich, so muss für eine gute Befestigung der Magnete 4 am Rotor 3 gesorgt werden. Nicht nur die in diesem speziellen Ausführungsbeispiel wirkenden Fliehkräfte spielen eine Rolle, sondern auch die Erwärmung des Rotors durch Wirbelströme, und evtl. tangentiale Beschleunigungen der Magnete 4 beim Beschleunigen und Bremsen des Rotors 3.

Die übliche Verklebung der Magnete mit dem Rotor ist daher möglicherweise nicht mehr ausreichend, und wird erfindungsgemäß ersetzt oder ergänzt durch eine Klemmverbindung.

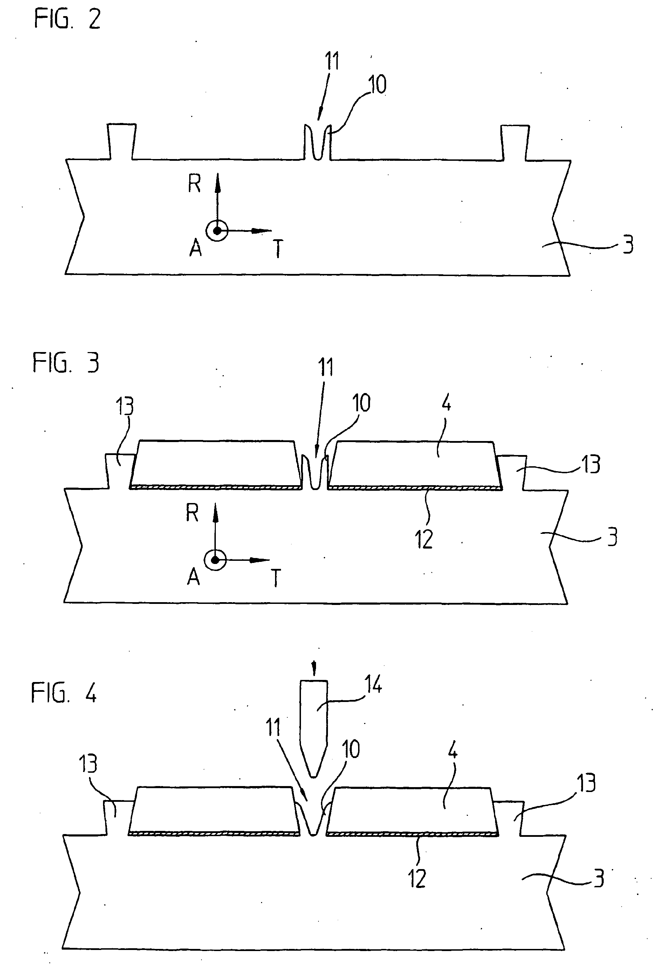

Hierzu werden spezielle Vorrichtungen am Rotor 3 eingesetzt. Figur 2 zeigt einen Ausschnitt eines solchen Rotors 3 in axialer Blickrichtung, der der Einfachheit halber gestreckt gezeichnet ist. Die axiale, radiale und tangentiale Richtung A, R, T ist auch in Figur 2 eingezeichnet, um die Orientierung zu erleichtern. In Figur 2 ist ein Fertigungsstadium des Rotors 3 dargestellt, in dem noch keine Magnete 4 am Rotor 3 befestigt sind.

Man erkennt einen Steg 10, der sich im wesentlichen über die axiale Länge des Rotors 3 erstreckt. Ungefähr mittig und auf der dem Rotor 3 abgewandten Seite des Steges 10 weist der Steg 10 eine Nut 11 auf. Diese Nut 11 ermöglicht es, den Steg 10 auf seiner dem Rotor 3 abgewandten Seite aufzuweiten, und so die zunächst auf die Rotoroberfläche annähernd senkrecht stehenden Seitenflächen des Steges 10 in eine tangentiale Richtung T zu verbiegen. Der Steg 10 kann so zum Klemmen von Magneten 4 dienen und wird daher auch als Klemmelement 10 bezeichnet.

Der Rotor 3 weist weiter parallel zu den Klemmelementen 10 verlaufende Anschläge 13 auf, die einen trapezähnlichen Querschnitt aufweisen, so dass die Anschläge 13 auf der dem Rotor 3 zugewandten Seite schmäler sind als auf der dem Rotor 3 abgewandten Seite.

Vorzugsweise sind mehrere Anschläge (13) und Klemmelemente (10) in tangentialer Richtung (T) abwechselnd auf dem Rotor 13 angeordnet. Es ist aber auch möglich, ausschließlich Klemmelemente 10 zu verwenden, da diese selbst auch als Anschlag wirksam sind, wie sich weiter unten noch zeigen wird.

Der Rotor 3 ist vorzugsweise wie der Stator 2 als Blechpaket ausgebildet. So können Wirbelstromverluste klein gehalten werden. Außerdem lassen sich der Rotor 3 mit seinen Klemmelementen 10 und Anschlägen 13 sehr einfach einstückig herstellen. Beim Stanzen der Bleche für das Blechpaket des Rotors 3 ist lediglich ein anderes Werkzeug zu verwenden, das eine Form entsprechend Figur 2 aufweist. Mehrere derart hergestellten Bleche hintereinander angeordnet ergeben den Rotor 3 mit Stegen 10 und Anschlägen 13. Die Herstellung eines Rotors 3 gemäß Figur 2 ist daher nicht aufwändiger als die eines Rotors 3 ohne Klemmelemente 10.

In Figur 3 sind nun bereits Magnete 4 in den Rotor 3 eingesetzt und mit einer Klebstoffschicht 12 mit diesem verbunden. Die Magnete 4 weisen einen trapezähnlichen Querschnitt auf, wobei die Magnete 4 auf der dem Rotor 3 zugewandten Seite breiter sind als auf der dem Rotor 3 abgewandten Seite. Die schrägen Seitenflächen der Anschläge 13 und der Magnete 4 sind dabei aufeinander abgestimmt. Das Einsetzen der Magnete 4 zwischen die Anschläge 13 und die Klemmelemente 10 gelingt wegen der im diesem Stadium des Herstellungsprozesses noch annähernd senkrechten Seitenflächen der Klemmelemente 10 mühelos.

Figur 4 zeigt den fertig montierten Rotor 3. Mit einem Stempel 14 zum Aufweiten des Klemmelements 10 wird die Klemmwirkung des Klemmelements 10 aktiviert. Durch Einpressen des Stempels 14 in die Nut 11 wird der Steg 10 an seiner dem Rotor 3 abgewandten Seite aufgeweitet, seine Seitenwände neigen sich in tangentialer Richtung, bis sie mit den schrägen Seitenflächen der Magnete 4 in Kontakt kommen und so die Magnete 4 gegen den Rotor 3 und gegen die Anschläge 13 pressen. Nach dem Aufweiten der Stege 10 entspricht deren Form bis auf die Nut 11 im Wesentlichen der Form der Anschläge 13. Damit ist klar, dass statt der Anschläge 13 auch Stege 10 verwendet werden könnten, die dann beiderseits eines jeden Magneten 4 angeordnet wären.

Es können alle Klemmelemente 10 gleichzeitig mit mehreren Stempeln 14 aktiviert werden, oder nacheinander mit nur einem Stempel 14.

Vorzugsweise erfolgt die Aktivierung der Klemmwirkung der Klemmelemente 10, noch bevor die Klebstoffschicht 12 ausgehärtet ist. Die Klebstoffschicht 12 schützt die Kanten der Magnete 4, da sie verhindert, dass diese unmittelbar gegen den Anschlag 13 oder das Klemmelement 10 gedrückt werden. Bevorzugt werden alle Kanten mit einem Radius von 0,2mm versehen. Ohne eine Klebstoffschicht 12 sollten die Kanten der Magnete 4 unbedingt abgeschrägt oder abgerundet werden.

Um auch eine Klemmung in axialer Richtung A zu erreichen, können die Magnete 4 an ihren schrägen Seitenflächen mit einer zusätzlichen Ausnehmung versehen werden, die sich nur über einen Teil der axialen Länge der Magnete 4 erstreckt. Die Klemmelemente 10 greifen dann in diese Ausnehmung ein und sichern die Magnete gegen axiales Verrutschen. Auf die Klebstoffschicht 12 kann so gut verzichtet werden.

Es ist nicht unbedingt erforderlich, die Stege 10 auf ihrer gesamten Länge mit dem Stempel 14 zu verformen. Es genügt auch eine abschnittsweise Aufweitung der Stege 10. Die für einen einzelnen Stempelvorgang nötige Kraft reduziert sich so erheblich. Vorzugsweise wechseln sich verformte und nicht verformte, etwa 5mm lange Bereiche der Stege 10 in axialer Richtung ab. Für Magnetsegmente mit 10mm Länge hat sich dies als vorteilhaft erwiesen. Die nicht verformten Bereiche eines solchen Steges 10 sind überflüssig und können, z.B. durch abschnittsweises verwenden unterschiedlicher Bleche für das Blechpaket des Rotors 3, weggelassen werden. Über die axiale Länge des Rotors (im Beispiel ca. 100mm bei einem RotorDurchmesser von 760mm) wird der Steg 10 dann durch mehrere beabstandete Stegsegmente gebildet.

Generell sollte ca. die Hälfte der Länge eines Magnetsegmentes von den Klemmelementen 10 geklemmt werden. Die Klemmkraft jedes Klemmelements 10 sollte annährend gleichmäßig auf die gesamte axiale Länge des Rotors 3 bzw. des jeweils geklemmten Magneten 4 verteilt sein.

Da die Klemmelemente 10 in radialer Richtung R dünner sind als die Magnete 4, ragen sie nicht in den Spalt zwischen dem Rotor 3 und dem Stator 2. Der Spalt kann so optimal klein gehalten werden, um ein maximales Drehmoment zu erhalten. Ermöglicht wird diese vorteilhafte Anordnung durch die schwalbenschwanzartige Verbindung zwischen den schrägen Seitenflächen der Magnete 4 einerseits und der Klemmelemente 10 bzw. Anschläge 13 andererseits.

Das hier vorgestellte Ausführungsbeispiel stellt einen rotatorischen Synchronmotor dar. Die vorliegende Erfindung lässt sich aber ebenso bei Linearmotoren anwenden, die auch als ein Segment eines rotatorischen Motors mit unendlichem Radius gesehen werden können. Die tangentiale Richtung des Rotors entspricht dann der (linearen) Bewegungsrichtung des Linearmotors, die axiale Richtung steht dazu senkrecht und spannt mit dieser die Ebene der Magnete auf, die radiale Richtung steht zur Ebene der Magnete senkrecht. Die Bewegung zwischen Rotor und Stator ist als Relativbewegung zu sehen. Für die Erfindung ist es nicht wichtig, welches der beiden Elemente gegenüber der Umgebung bewegt wird und welches ruht. Als Rotor wird lediglich der Teil des Motors bezeichnet, der die Magnete trägt, der Stator trägt die Wicklungen. Die Erfindung lässt sich natürlich für jeden Typ von Motor oder auch Generator einsetzen, der Magnete verwendet. In diesem Sinne sei der Begriff Synchronmotor nicht als Einschränkung auf einen speziellen Typ verstanden.

## Patentansprüche

1. Synchronmotor mit einem Rotor (3), auf dem Magnete (4) durch axial erstreckte Klemmelemente (10) befestigt sind, wobei die Klemmelemente (10) als Stege (10) ausgebildet sind, die zwischen den Magneten (4) auf dem Rotor (3) angeordnet sind, und wobei axial erstreckte Nuten (11) so in die Stege (10) eingebracht sind, dass sie ein zumindest abschnittsweises Aufweiten der Stege (10) auf deren dem Rotor (3) abgewandten Seite ermöglichen, **dadurch gekennzeichnet dass** die Magnete (4) radial außen am Rotor (3) angebracht sind und einen trapezähnlichen Querschnitt aufweisen, wobei die Magnete (4) auf der dem Rotor (3) zugewandten radial inneren Seite breiter sind als auf der dem Rotor (3) abgewandten radial äußeren Seite, so dass die Magnete (4) durch die Klemmelemente (10) in radialer Richtung (R) gegen den Rotor (3) und in tangentialer Richtung gegen axial erstreckte Anschläge (13) gepresst werden.

2. Synchronmotor nach Anspruch 1, **dadurch gekennzeichnet, dass** die Anschläge (13) parallel zu den Klemmelementen (10) angeordnet sind.

3. Synchronmotor nach Anspruch 1 oder 2, **dadurch gekennzeichnet, dass** die Anschläge (13) einen trapezähnlichen Querschnitt aufweisen, so dass die Anschläge (13) auf der dem Rotor (3) zugewandten Seite schmäler sind als auf der dem Rotor (13) abgewandten Seite.

4. Synchronmotor nach einem der Ansprüche 1 - 3, **dadurch gekennzeichnet, dass** die Anschläge (13) und die Klemmelemente (10) in tangentialer Richtung (T) einander abwechselnd auf dem Rotor (13) angeordnet sind.

5. Synchronmotor nach einem der Ansprüche 1 - 4, **dadurch gekennzeichnet, dass** der Rotor (3) und die Klemmelemente (10) einstückig ausgebildet sind.

6. Synchronmotor nach einem der Ansprüche 1 - 4, **dadurch gekennzeichnet, dass** der Rotor (3), die Klemmelemente (10) und die Anschläge (13) einstückig ausgebildet sind.

7. Synchronmotor nach einem der vorhergehenden Ansprüche, **dadurch gekennzeichnet, dass** der Rotor (3) als Blechpaket ausgebildet ist.

8. Synchronmotor nach einem der vorhergehenden Ansprüche, **dadurch gekennzeichnet, dass** die Magnete (4) mittels einer Klebstoffschicht (12) mit dem Rotor (3) verklebt sind.

9. Synchronmotor nach einem der vorhergehenden Ansprüche, **dadurch gekennzeichnet, dass** die Magnete (4) in axialer Richtung (A) segmentiert sind.

## Claims

1. Synchronous motor comprising a rotor (3), on which magnets (4) are fastened via axially extending clamping elements (10), the clamping elements (10) being formed as webs (10) which are arranged between the magnets (4) on the rotor (3), and axially extending grooves being made in the webs (10) in such a way as to enable expansion of the webs (10) at least in part on the side thereof remote from the rotor (3), **characterised in that** the magnets (4) are attached radially outwardly on the rotor (3) and have a trapezium-like cross-section, the magnets (4) being wider on the radially inward side facing towards the rotor (3) than on the radially outward side remote from the rotor (3) in such a way that the magnets (4) are pressed against the rotor (3) in a radial direction (R), and against axially extending stops (13) in a tangential direction, by the clamping elements (10).

2. Synchronous motor according to claim 1, **characterised in that** the stops (13) are arranged parallel to the clamping elements (10).

3. Synchronous motor according to either claim 1 or claim 2, **characterised in that** the stops (13) have a trapezium-like cross-section in such a way that the stops (13) are narrower on the side facing towards the rotor (3) than on the side remote from the rotor (3).

4. Synchronous motor according to any one of claims 1 to 3, **characterised in that** the stops (13) and the clamping elements (10) are arranged alternately with one another on the rotor (13) in the tangential direction (T).

5. Synchronous motor according to any one of claims 1 to 4, **characterised in that** the rotor (3) and the clamping elements (10) are formed in one piece.

6. Synchronous motor according to any one of claims 1 to 4, **characterised in that** the rotor (3), the clamping elements (10) and the stops (13) are formed in one piece.

7. Synchronous motor according to any one of the preceding claims, **characterised in that** the rotor (3) is formed as a laminated core.

8. Synchronous motor according to any one of the preceding claims, **characterised in that** the magnets (4) are glued to the rotor (3) by means of an adhesive layer (12).

9. Synchronous motor according to any one of the preceding claims, **characterised in that** the magnets (4) are segmented in the axial direction (A).

## Revendications

1. Moteur synchrone comprenant un rotor (3) sur lequel des aimants (4) sont fixés par des éléments de serrage (10) s'étendant dans la direction axiale, lesdits éléments de serrage (10) étant conformés en nervures (10) qui sont disposées sur le rotor (3), entre les aimants (4), et des rainures (11), qui s'étendent dans la direction axiale, étant aménagées dans les nervures (10) de manière à permettre l'écartement, au moins par portions, des nervures (10), sur leur côté éloigné du rotor (3), **caractérisé par le fait que** les aimants (4) sont fixés radialement à l'extérieur sur le rotor (3) et présentent une section sensiblement trapézoïdale, les aimants (4), sur leur face radialement intérieure, tournée vers le rotor (3), étant plus larges que sur leur face radialement extérieure, éloignée du rotor (3), de sorte que les aimants (4) sont pressés par les éléments de serrage (10) contre le rotor (3), dans la direction radiale (R), et contre des butées (13) s'étendant dans le sens axial, dans la direction tangentielle.

2. Moteur synchrone selon la revendication 1, **caractérisé par le fait que** les butées (13) sont disposées parallèlement aux éléments de serrage (10).

3. Moteur synchrone selon la revendication 1 ou 2, **caractérisé par le fait que** les butées (13) présentent une section sensiblement trapézoïdale, de sorte que sur leur côté tourné vers le rotor (3), les butées (13) sont plus étroites que sur leur côté éloigné du rotor (3).

4. Moteur synchrone selon une des revendications 1 à 3, **caractérisé par le fait que** les butées (13) et les éléments de serrage (10) sont disposés sur le rotor (3) en alternant dans la direction tangentielle (T).

5. Moteur synchrone selon une des revendications 1 à 4, **caractérisé par le fait que** le rotor (3) et les éléments de serrage (10) sont réalisés d'une seule pièce.

6. Moteur synchrone selon une des revendications 1 à 4, **caractérisé par le fait que** le rotor (3), les éléments de serrage (10) et les butées (13) sont réalisés d'une seule pièce.

7. Moteur synchrone selon une des revendications précédentes, **caractérisé par le fait que** le rotor (3) est réalisé sous forme d'empilage de tôles.

8. Moteur synchrone selon une des revendications précédentes, **caractérisé par le fait que** les aimants (4) sont collés sur le rotor (3) au moyen d'une couche d'adhésif (12).

9. Moteur synchrone selon une des revendications précédentes, **caractérisé par le fait que** les aimants (4) sont segmentés dans la direction axiale (A).
